(19) Europäisches Patentamt / European Patent Office / Office européen des brevets

(11) **EP 4 501 858 A1**

(12) **EUROPEAN PATENT APPLICATION**
published in accordance with Art. 153(4) EPC

(43) Date of publication:
**05.02.2025 Bulletin 2025/06**

(21) Application number: **23781304.3**

(22) Date of filing: **28.03.2023**

(51) International Patent Classification (IPC):
$C01G\ 53/00$ (2025.01)    $H01M\ 4/525$ (2010.01)
$H01M\ 4/505$ (2010.01)    $C01G\ 53/04$ (2025.01)
$H01M\ 4/02$ (2006.01)

(52) Cooperative Patent Classification (CPC):
C01G 53/00; C01G 53/04; H01M 4/02; H01M 4/505;
H01M 4/525; Y02E 60/10

(86) International application number:
**PCT/KR2023/004110**

(87) International publication number:
**WO 2023/191449 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 KR 20220040173**

(71) Applicant: **L&F Co., Ltd.
Daegu 42724 (KR)**

(72) Inventors:
• **LIM, Hyo Taek
  Daegu 42712 (KR)**
• **GU, Jeong A
  Daegu 42712 (KR)**
• **LEE, Jun Sung
  Daegu 42712 (KR)**
• **PARK, Da Jeong
  Daegu 42712 (KR)**
• **JUNG, Jae Hoon
  Daegu 42712 (KR)**

(74) Representative: **Jung, Minkyu
  Wuesthoff & Wuesthoff
  Patentanwälte und Rechtsanwalt PartG mbB
  Schweigerstraße 2
  81541 München (DE)**

(54) **NOVEL PRECURSOR PARTICLE AND CATHODE ACTIVE MATERIAL MANUFACTURED FROM SAME**

(57)    Disclosed is a novel precursor particle containing at least one transition metal, wherein the precursor particle has an intensity ratio of c/(a+b) of 0.6 or more, wherein, in each $2\theta$ range in XRD analysis, a represents an intensity of the highest peak in a $2\theta$ range of not less than 10° and less than 30°, b represents an intensity of the highest peak in a $2\theta$ range of not less than 30° and less than 40°, and c represents an intensity of the highest peak in a $2\theta$ range of not less than 40° and not more than 50°.

【FIG. 2a】

EP 4 501 858 A1

**Description**

[Technical Field]

The present invention relates to novel precursor particles that satisfy specific peak intensity conditions in XRD analysis and have excellent productivity in the production of cathode active materials and to cathode active materials produced using the same.

[Background Art]

Lithium secondary batteries are the most popular batteries for digital devices such as laptops and mobile phones. The application fields of lithium secondary batteries are expected to expand from portable information and communication devices to electric vehicles, hybrid vehicles, space and aviation, and energy storage systems (ESSs) through cost reduction and performance stabilization through mass production and technological development, and continuous market growth is expected.

The main materials of lithium secondary batteries are a cathode active material, an anode active material, an electrolyte, and a separator. Thereamong, the cathode active material is the most core material for preparing secondary batteries. Depending on the ingredient of the cathode active material, the cathode active material may be classified into LCO (lithium cobalt oxide), LNCMO (lithium nickel cobalt manganese oxide), LNCAO (lithium nickel cobalt aluminum oxide), LMO (lithium manganese oxide), LFP (lithium iron phosphate) and the like.

The firing process is essential in the process of preparing these cathode active materials and a firing process using RHK (roller hearth kiln) type equipment is widely known. In general, the RHK firing process is a process in which a precursor mixture (a mixture containing an alkali metal compound, a transition metal compound, or the like) is injected into a saggar, commonly called a "saggar" and the saggar is passed through the RHK facility maintained at a high temperature to produce cathode active materials and the like from the precursor mixture through chemical reactions such as firing (calcination).

At this time, the productivity (production capacity) of the firing process is determined depending on the amount of precursor mixture filling the saggar, the firing time, the weight reduction (loss) of the precursor mixture after firing, and the like.

The productivity of the firing process is directly related to the unit cost of preparing the cathode active material. Therefore, research is actively being conducted to increase the productivity of the firing process.

In order to increase the productivity of the firing process and reduce the unit cost of the cathode active material, the following representative methods may be considered:

First, a method of increasing the amount of precursor mixture filling the saggar;
Second, a method of shortening the firing time; and
Third, a method of reducing the weight loss of the precursor mixture after firing.

The methods can improve production per hour, but the following problems may occur.

In relation to the first method, when a large amount of precursor mixture or the like is injected into the saggar and fired, the entire volume of the injected precursor mixture increases and the problem in which the applied heat and purge gas are unevenly transferred (conducted) or diffused to each part of the precursor mixture, or the like, may occur.

Specifically, when a heating element inside the RHK is located outside the saggar, as the volume of the injected precursor mixture increases, the distance between the surface and center of the precursor mixture increases, which may increase the unevenness of heat transfer. In addition, when the density of the precursor mixture is low, heat transfer between the mixture particles is not smooth, which may further increase the unevenness of heat transfer.

In addition, depending on the type of the cathode active material, a purge gas is injected into the RHK and $O_2$ (oxygen) or dry air is generally used as the purge gas. As the volume of the injected precursor mixture increases, the purge gas may be unevenly diffused to the surface and center of the precursor mixture.

In relation to the second method, when the firing time of the precursor mixture is shortened, a problem in which a cathode active material having a desired type of crystal structure or degree of crystallinity cannot be produced may occur.

Specifically, when a precursor mixture containing an alkali metal compound and a transition metal compound is fired, an oxide having a crystal structure such as a layered, spinel, or olivine crystal structure should be formed so that intercalation and de-intercalation of the alkali metal can occur smoothly. However, when the firing time is shortened, a cathode active material having a low crystallinity of the desired crystal structure, for example, having a crystal structure of a rock salt structure, may be produced due to insufficient time for which the oxide of the corresponding crystal structure is formed.

In relation to the third method, when the precursor mixture is fired, some substances such as water vapor evaporate, resulting in a fired product having a reduced weight compared to the precursor mixture before firing. When the firing time or the firing temperature is reduced, the weight reduction amount can be reduced, but problems similar to those that may be caused by the shortened firing time may occur.

Meanwhile, a method of preparing cathode active materials including mixing a compound containing lithium as an alkali metal with a precursor compound and then firing the resulting mixture to produce cathode active materials. Specifically, $Li_2CO_3$ or LiOH compounds are selectively used depending on the type of transition metal precursor.

When a transition metal precursor with low thermodynamic stability of lithium is used, lithium does not react properly with the transition metal compound and thus lithium byproducts such as $Li_2O$, $Li_2CO_3$, and LiOH may remain on the surface of cathode active material particles. The problems of the conventional methods of improving productivity described above cause an increase in such lithium byproducts, and such lithium byproducts usually cause various problems such as swelling and gallation.

Therefore, there is urgent demand for novel technology that can solve these problems.

[Disclosure]

[Technical Problem]

Therefore, the present invention has been made to solve the above and other technical problems that have yet to be solved.

Therefore, as a result of extensive research and various experiments, the present inventors developed novel precursor particles with specific conditions and found that a cathode active material produced using the novel precursor particles can improve the productivity of the firing process, while improving the structural stability, reducing lithium by-products, suppressing side reactions with the electrolyte, improving the resistance characteristics and increasing the initial capacity and lifespan characteristics. Based on this finding, the present invention has been completed.

[Technical Solution]

In accordance with an aspect of the present invention, provided is a novel precursor particle containing at least one transition metal, wherein the precursor particle has an intensity ratio of c/(a+b) of 0.6 or more, wherein, in each $2\theta$ range in XRD analysis, a represents an intensity of the highest peak in the $2\theta$ range of not less than 10° and less than 30°, b represents an intensity of the highest peak in the $2\theta$ range of not less than 30° and less than 40°, and c represents an intensity of the highest peak in the $2\theta$ range of not less than 40° and not more than 50°.

As used herein, the term "the highest peak" refers to the peak having the highest intensity in the specified range on the XRD analysis graph.

The novel precursor particle according to the present invention is distinguished from transition metal hydroxides as typical examples of conventional transition metal precursors, lithium transition metal oxides as cathode active materials, and transition metal oxides as rock salts.

First, unlike transition metal hydroxides, which are transition metal precursors typically produced by coprecipitation, the novel precursor particle of the present invention includes a type of oxide structure.

In addition, unlike transition metal oxides of rock salts, which are electrically completely inactive, the novel precursor particle of the present invention exhibits slight electrical properties, but is distinguished from materials having a highly electrically active crystal structure, such as lithium transition metal oxides as cathode active materials.

Rather, the novel precursor particle according to the present invention has at least a part of structural properties of the material mentioned above and thus is distinguished therefrom in terms of materials.

Therefore, in one specific example, the precursor particle of the present invention may have at least a part of the structural property (1) of the transition metal hydroxide as the precursor, the structural property (2) of the lithium transition metal oxide as the active material, and the structural property (3) of the transition metal oxide as rock salt in the Miller index in each $2\theta$ range of the XRD analysis peaks that may occur in each $2\theta$ range.

The following Table 1 shows Miller indexes of peaks that may occur in each $2\theta$ range in XRD analysis, and shows specific examples of cases where the novel precursor particles according to the present invention have all of structural property (1), structural property (2), and structural property (3).

[Table 1]

| Item | | XRD | | | | 10~30(a) | | 30~40(b) | | | 40~50(c) | | |
|---|---|---|---|---|---|---|---|---|---|---|---|---|---|
| Transition metal hydroxide | Structural property (1) | 2Θ | | 19 | 33 | | | | | 39 | | | |
| Conventional precursor | | Miller index | | (001) | (100) | | | | | (101) | | | |
| Lithium transition metal oxide | Structural property (2) | 2Θ | 18 | | | 36 | | 37 | 38 | | | 44 | 48 |
| cathode active material | | Miller index | (003) | | | (101) | | (006) | (012) | | | (104) | (015) |
| Transition metal oxide | Structural property (3) | 2Θ | | | | | 37 | | | | 43 | | |
| Rock salt | | Miller index | | | | | (111) | | | | (200) | | |
| Transition metal oxide | Structural property (1+2+3) | 2Θ | 18 | 19 | 33 | 36 | 37 | 37 | 38 | 39 | 43 | 44 | 48 |
| Novel precursor particle | | Miller index | (003) | (001) | (100) | (101) | (111) | (006) | (012) | (101) | (200) | (104) | (015) |

However, as described above, it is obvious that the precursor particle according to the present invention may be designed to have only some of these structural properties. For example, the precursor particle according to the present invention may be designed to have structural property (2) by combining only parts of structural properties (1) and (3).

However, in any case, the requirement of the intensity ratio of c/(a+b) of 0.6 or more must be satisfied. The upper limit of c/(a+b) is not particularly limited and is, for example, 10 or less, preferably 5 or less.

The novel precursor particles according to the present invention may be prepared, for example, by firing a transition metal hydroxide in an atmosphere containing oxygen. The transition metal hydroxide may be prepared, for example, by coprecipitation known in the art.

The firing may be performed under slightly milder conditions than firing of the novel precursor particles for the preparation of a cathode active material, that is, at a relatively low temperature, for example, at a temperature of 200°C to 800°C, preferably 400 to 700°C, for a shorter time than the firing time for the preparation of a cathode active material, for example, for 0.5 to 10 hours, preferably 1 to 5 hours.

When the cathode active material is prepared from the novel precursor particle having some or all of the structural properties (1) to (3), the productivity of the firing process can be improved and the problems of the prior art described above can be solved.

Specifically, in the process of preparing novel precursor particles by firing transition metal hydroxides, or the like, unnecessary substances such as water vapor and hydrogen gas are removed, the density increases compared to the conventional precursor mixture, so a greater amount of novel precursor particles can be injected into the constant volume of saggar, and the hourly production amount of the firing process can be increased.

In addition, since the weight decreases as unnecessary substances are removed during the preparation process of the novel precursor particles, the weight decrease amount that occurs during the firing process for preparing the cathode active material is smaller compared to the conventional precursor mixture, and the hourly production amount can be increased during the firing process of the cathode active material.

Furthermore, since the amount of heat energy required for the reaction of the transition metal and the alkali metal, and the heat energy required for removal of unnecessary substances during the preparation of the cathode active material are smaller when using the novel precursor particles than when using the conventional precursor mixture, the firing time required to prepare the cathode active material can be shortened and thus the hourly production amount can be increased.

Unlike the process of preparing a cathode active material by mixing a transition metal hydroxide with an alkali metal compound, which is a conventional method, followed by firing, the method according to the present invention has an additional firing process for preparing the novel precursor particle and thus the productivity may seem to be reduced due to the additional process compared to the conventional method. However, the overall firing time in the process of preparing a cathode active material is greatly shortened and the effects of increasing filling amount and reducing weight loss as described above can be realized. For this reason, the productivity is increased.

In some cases, an alkali metal compound may be mixed with a transition metal hydroxide and fired so that an alkali metal can be incorporated into the novel precursor particle.

For example, the mixing ratio of the alkali metal and the transition metal may range from 0 to 1.5 based on the molar ratio (the number of moles of alkali metal/the number of moles of transition metal, hereinafter collectively referred to as "molar ratio") and may vary depending on the type of the transition metal.

In one specific example, when the appropriate proportion of alkali metal in the cathode active material to be ultimately prepared is 100%, the ratio of alkali metal in the novel precursor particle may range from 0% to 100%. When the proportion of alkali metal in the novel precursor particle is less than 100%, an alkali metal compound, or the like may be further mixed into the novel precursor particles to adjust the proportion to 100%, and then fired to prepare the cathode active material. However, even if the proportion of alkali metal in the novel precursor particle is 100%, firing at a high temperature is necessary in order to prepare a cathode active material having a crystal structure that exhibits appropriate electrical characteristics.

On the other hand, when the novel precursor particle contains an excessively small amount of alkali metal, the structural property (3) in Table 1 may be excessive and when a cathode active material is prepared using the novel precursor particle, the battery characteristics may deteriorate. Therefore, the novel precursor particle preferably contains an appropriate amount of alkali metal if possible. Therefore, the mixing ratio of the alkali metal and the transition metal in the novel precursor particle is preferably in the range of 0.1 to 1.5 on a molar ratio basis.

This alkali metal may be present inside the particle or on the surface of the particle. That is, the alkali metal may form a crystal structure corresponding to the structural property (2) in Table 1 above through a chemical reaction with the transition metal, or the alkali metal may be present as an unreacted substance inside the transition metal particle or on the surface of the transition metal particle. The alkali metal present as an unreacted substance reacts to form a crystal structure during the process of firing the novel precursor particle for the preparation of the cathode active material.

The alkali metal may be, for example, at least one of Li or Na.

The alkali metal present in the cathode active material forms a charge neutrality with the electrons that enter the electrode through the current collector in the secondary battery and becomes a medium that stores electric energy in the electrode, and is a major factor in determining the amount of electric energy. As an alkali metal, Li is the lightest and has the lowest standard reduction potential among metals known in nature and thus exhibits a high electromotive force, and has a high energy density per weight and volume when applied as an electrode material. Therefore, Li is generally used as an alkali metal for the cathode active material, but Na may be applied in some cases.

In a specific example, in the novel precursor particle of the present invention, at least one of the peaks a, b, and c observed in the XRD analysis has a half-width of 0.50 $2\theta(°)$ or more.

The half-width of the peak in the XRD analysis is a measure of the degree of crystallinity of the corresponding crystal plane of the corresponding material. In this case, the half-width refers to the width of the horizontal axis at the point corresponding to half of the maximum value of the peak intensity.

In the conventional method, the crystallinity increases as the mixture containing a transition metal hydroxide and an alkali metal compound is fired at a high temperature or for a long time. In the novel precursor particle of the present invention, some or all of the structural properties (1) to (3) in Table 1 above correspond to an appropriate level of crystallinity depending on the set conditions of the preparation process. When the novel precursor particle has this level of crystallinity, the half-width of at least one of the peaks a, b, and c may be 0.50 $2\theta(°)$ or more.

On the other hand, when the novel precursor particle has a half-width of 0.50 $2\theta(°)$ or less due to high firing temperature, or the like, at least one of the structural properties (1) to (3) in Table 1 may be excessive crystallinity and the desired effect of the present invention cannot be obtained.

In one specific example, the novel precursor particle of the present invention may have a composition of the following Formula 1.

$$[(1-x-y)A_2CO_3 * xAOH * yA_2O] \ / \ [(1-a-b)M(OH)_2 * aMOOH * bM(OH_{1-c})_2] \ /$$

$$[MO_{(2-\alpha)}] / [A_{1-\gamma}M_{1+\gamma}O_2] \ (1)$$

wherein

x, and y satisfy $0 \leq x \leq 1$, $0 \leq y \leq 1$, and $0 \leq x+y \leq 1$;
a, b, and c satisfy $0 \leq a \leq 1$, $0 \leq b \leq 1$, $0 \leq a+b \leq 1$, and $0 < c < 0.5$;
$\alpha$ and y satisfy $0 \leq \alpha \leq 1$, and $-0.5 \leq \gamma \leq 1$;
A/M(molar ratio) $\geq 0$;
A includes at least one alkali metal; and
M includes at least one transition metal.

A may include, for example, at least one of Li or Na.

M may include at least one, preferably at least two, selected from elements belonging to Group 5 (Group VB) to Group 11 (Group VIIIB) of the periodic table, for example, and may be selected from Ti, Sc, V, Cr, Mn, Fe, Ni, Co, Y, Cu, Zr, Nb, Mo, Tc, Ru, Rh, Ag, and Pd, preferably Ni, Co, and Mn.

A and/or M may further include at least one element of Group 13 (Group IIIA) to Group 15 (Group IVA). In this case, the additional element may be selected from Al, Si, P, Sn, In, B, and the like, but is not limited thereto.

In Formula 1, as is generally known, defects may occur in the position of oxygen or hydrogen, and the anion may be partially substituted equivalently with an anion such as S, F, $PO_4$, or $SO_4$. In addition, in Formula 1, the alkali metal of A may be substituted with an alkaline earth metal, as is generally known. In this case, the alkaline earth metal may have a molar ratio of 1/2 with respect to the alkali metal.

A/M (molar ratio) defined as a content ratio of elements refers to a molar ratio of the total alkali metal (A) to the transition metal (M). As defined above, AIM (molar ratio) is 0 or more, preferably 0 to 1.5 or less in order to suppress alkali metal volatilization and cation mixing at high temperatures. In addition, A/M is more preferably 0.3 to 1.4, and particularly more preferably 0.5 to 1.35.

The present invention also provides a novel precursor powder for preparing a cathode active material containing the novel precursor particle.

The precursor powder means a composition composed of a plurality of precursor particles and may be prepared, for example, by firing transition metal hydroxide particles alone prepared by co-precipitation, or by firing a mixture of the transition metal hydroxide particles and an alkali metal compound under an oxidizing atmosphere.

As described above, when each novel precursor particle contains a sufficient amount of alkali metal, the cathode active material may be prepared by firing only the precursor powder itself. When each novel precursor particle does not contain a sufficient amount of an alkali metal, the precursor powder may be obtained by mixing a compound or mixture containing an alkali metal in an appropriate amount and fired to prepare the cathode active material.

The present invention also provides a cathode active material prepared using the novel precursor particle.

As can be seen from the results of Experimental Examples below, the cathode active material according to the present invention exhibits excellent electrochemical properties overall, such as fewer lithium byproducts, improved resistance characteristics, and improved initial capacity and lifespan characteristics.

The cathode active material can be easily prepared by techniques known in the art and thus a detailed description thereof will be omitted herein.

[Effects of the Invention]

As described above, the novel precursor particle according to the present invention improves the productivity of a firing process for preparing a cathode active material by satisfying specific peak intensity conditions in XRD analysis, and improves resistance characteristics and increases initial capacity and lifespan characteristics by improving the structural stability of the cathode active material, reducing lithium byproducts, and suppressing side reactions with the electrolyte.

[Description of the Drawings]

FIG. 1A is a graph showing results of XRD analysis of Experimental Example 1 for the material of Reference Example 1;

FIG. 1B is a graph showing results of XRD analysis of Experimental Example 1 for the material of Reference Example 2;

FIG. 1C is a graph showing results of XRD analysis of Experimental Example 1 for the material of Reference Example 3;

FIG. 2A is a graph showing results of XRD analysis of Experimental Example 1 for the material of Example 1;

FIG. 2B is a graph showing results of XRD analysis of Experimental Example 1 for the material of Example 2;

FIG. 2C is a graph showing results of XRD analysis of Experimental Example 1 for the material of Example 3;

FIG. 3A is a graph showing results of XRD analysis of Experimental Example 1 for the material of Example 1-1;

FIG. 3B is a graph showing results of XRD analysis of Experimental Example 1 for the material of Example 2-1;

FIG. 3C is a graph showing results of XRD analysis of Experimental Example 1 for the material of Example 3-1;

FIG. 4A is a graph showing results of XRD analysis of Experimental Example 1 for the material of Comparative Example 1;

FIG. 4B is a graph showing results of XRD analysis of Experimental Example 1 for the material of Comparative Example 2; and

FIG. 4C is a graph showing results of XRD analysis of Experimental Example 1 for the material of Comparative Example 3.

[Best mode]

Now, the present invention will be described in more detail with reference to the following examples. These examples should not be construed as limiting the scope of the present invention.

[Reference Example 1] Transition metal hydroxide (R1) with Ni-Co-Mn ratio of 50:20:30

$NiSO_4$ was used as a nickel raw material, $CoSO_4$ as a cobalt raw material, and $MnSO_4$ was used as a manganese raw material. These raw materials were dissolved in distilled water in a 1,000 L cylindrical reactor to prepare an aqueous metal salt solution with a ratio of Ni:Co:Mn of 50:20:30.

The aqueous metal salt solution and aqueous ammonia solution (chelating agent) were injected into a co-precipitation reactor to adjust the pH in the reactor to 10-12 and the ammonia concentration to 3,000-6,000 ppm. The temperature of the reactor was maintained at 50 to 60°C and the reaction time was set to 30 hours.

After the coprecipitation reaction, the precipitate synthesized by the coprecipitation process was filtered and dried at 120°C for 24 hours to prepare a transition metal hydroxide for preparing a cathode active material having a D50 of 8.0 to 10.0 μm.

[Example 1] Novel precursor particle having Li/Me ratio of 0.70 (E1)

A mixture was prepared by dry-mixing the transition metal hydroxide and $Li_2CO_3$ such that a molar ratio of Li to the transition metal of the transition metal hydroxide for preparing a cathode active material prepared in Reference Example 1 was adjusted to 0.70. Then, the mixture was fired under an oxygen atmosphere at 600°C for 3 hours and then cooled to room temperature to prepare a novel precursor particle for preparing a cathode active material.

[Example 1-1] Cathode active material using novel precursor particle (E1-1)

A mixture was prepared by further dry-mixing the novel precursor particle with additional $Li_2CO_3$ such that a molar ratio of Li to the transition metal of the novel precursor particle for preparing a cathode active material prepared in Example 1 was adjusted to 1.00. Then, the mixture was fired in an oxygen atmosphere at 950°C for 12 hours with a load of 6 kg and then cooled to room temperature to prepare a fired product. The obtained fired product was pulverized to prepare a cathode active material having a D50 of 10-12 $\mu$m.

[Comparative Example 1] Cathode active material using transition metal hydroxide (C1)

A mixture was prepared by further dry-mixing the transition metal hydroxide with $Li_2CO_3$ such that a molar ratio of Li to the transition metal of transition metal hydroxide for preparing a cathode active material prepared in Reference Example 1 was adjusted to 1.00. Then, the mixture was fired in an oxygen atmosphere at 950°C for 30 hours with a load of 3 kg and then cooled to room temperature to prepare a fired product. The obtained fired product was pulverized to prepare a cathode active material having a D50 of 10-12$\mu$m.

[Reference Example 2] Transition metal hydroxide having Ni:Co:Mn ratio of 70:15:15 (R2)

A cathode active material precursor was prepared in the same manner as in Reference Example 1 except that a content ratio of Ni, Co, and Mn was 70 : 15 : 15.

[Example 2] Novel precursor particle having Li/Me ratio of 1.00 (E1)

A mixture was prepared by dry-mixing the transition metal hydroxide and $LiOH \cdot H_2O$ such that a molar ratio of Li to the transition metal of transition metal hydroxide for preparing a cathode active material prepared in Reference Example 2 was adjusted to 1.00. Then, the mixture was fired under an oxygen atmosphere at 600°C for 4 hours and then cooled to room temperature to prepare a novel precursor particle for preparing a cathode active material.

[Example 2-1] Cathode active material using novel precursor particle (E2-1)

The novel precursor particle prepared in Example 2 was fired in an oxygen atmosphere at 850°C for 12 hours with a load of 6 kg and then cooled to room temperature to prepare a fired product. The obtained fired product was pulverized to prepare a cathode active material having a D50 of 5-6 $\mu$m.

[Comparative Example 2] Cathode active material using transition metal hydroxide (C2)

A mixture was prepared by further dry-mixing the transition metal hydroxide with $LiOH \cdot H_2O$ such that a molar ratio of Li to the transition metal of transition metal hydroxide for preparing a cathode active material prepared in Reference Example 2 was adjusted to 1.00. Then, the mixture was fired in an oxygen atmosphere at 850°C for 30 hours with a load of 3 kg and then cooled to room temperature to prepare a fired product. The obtained fired product was pulverized to prepare a cathode active material having a D50 of 5-6 $\mu$m.

[Reference Example 3] Transition metal hydroxide with Ni:Co:Mn ratio of 95:2.5:2.5 (R3)

A cathode active material precursor was prepared in the same manner as in Reference Example 1 except that a content ratio of Ni, Co, and Mn was 95 : 2.5 : 2.5.

[Example 3] Novel precursor particle having Li/Me ratio of 0.50 (E3)

A mixture was prepared by dry-mixing the transition metal hydroxide and $LiOH \cdot H_2O$ such that a molar ratio of Li to the transition metal of the transition metal hydroxide for preparing a cathode active material prepared in Reference Example 3 was adjusted to 0.50. Then, the mixture was fired under an oxygen atmosphere at 500°C for 4 hours and then cooled to room temperature to prepare a novel precursor particle for preparing a cathode active material.

[Example 3-1] Cathode active material using novel precursor particle (E3-1)

A mixture was prepared by dry-mixing the novel precursor particle and LiOH·H₂O such that a molar ratio of Li to the transition metal of the novel precursor particle for preparing a cathode active material prepared in Example 3 was adjusted to of 1.00. Then, the mixture was fired in an oxygen atmosphere at 700°C for 12 hours with a load of 6 kg and then cooled to room temperature to prepare a fired product. The obtained fired product was pulverized to prepare a cathode active material having a D50 of 14-15μm.

[Comparative Example 3] Cathode active material using transition metal hydroxide (C3)

A mixture was prepared by further dry-mixing the transition metal hydroxide with LiOH·H₂O such that a molar ratio of Li to the transition metal of transition metal hydroxide for preparing a cathode active material prepared in Reference Example 3 was adjusted to 1.00. Then, the mixture was fired in an oxygen atmosphere at 700°C for 30 hours with a load of 3 kg and then cooled to room temperature to prepare a fired product. The obtained fired product was pulverized to prepare a cathode active material having a D50 of 14-15 μm.

[Experimental Example 1] XRD (X-ray diffraction)

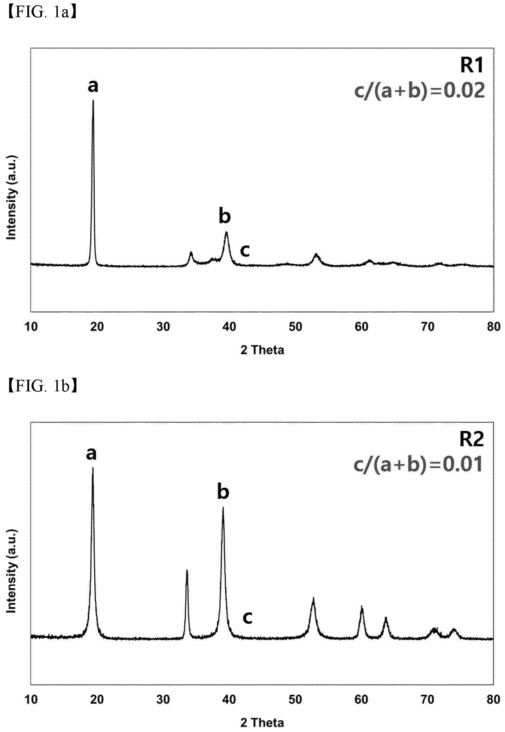

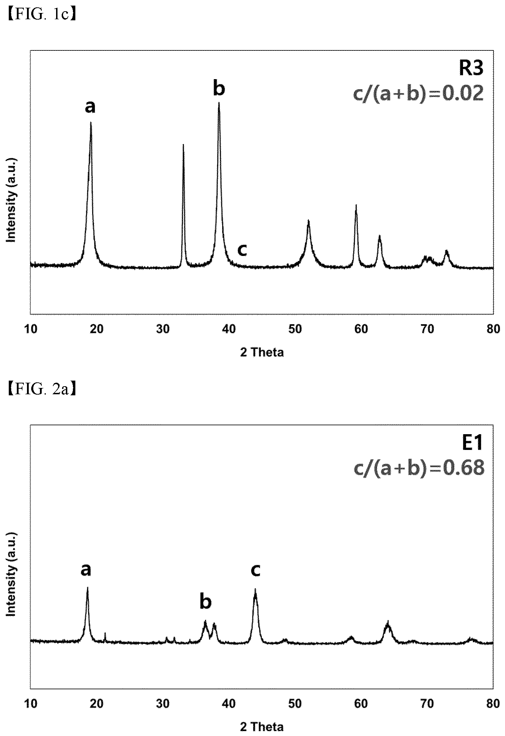

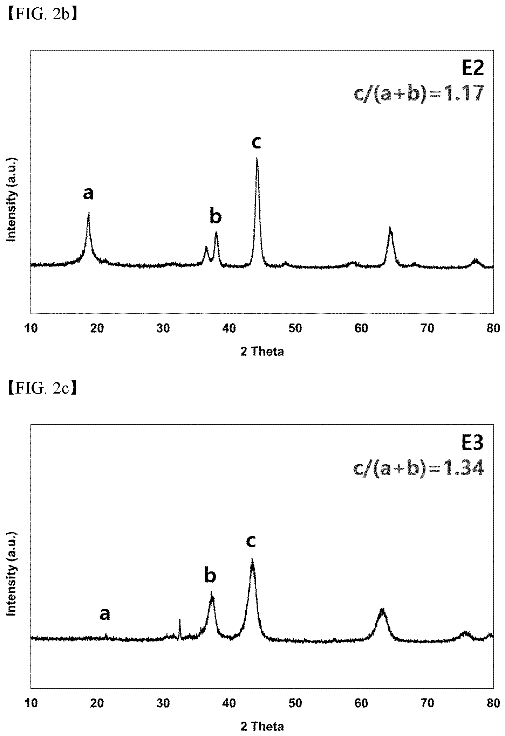

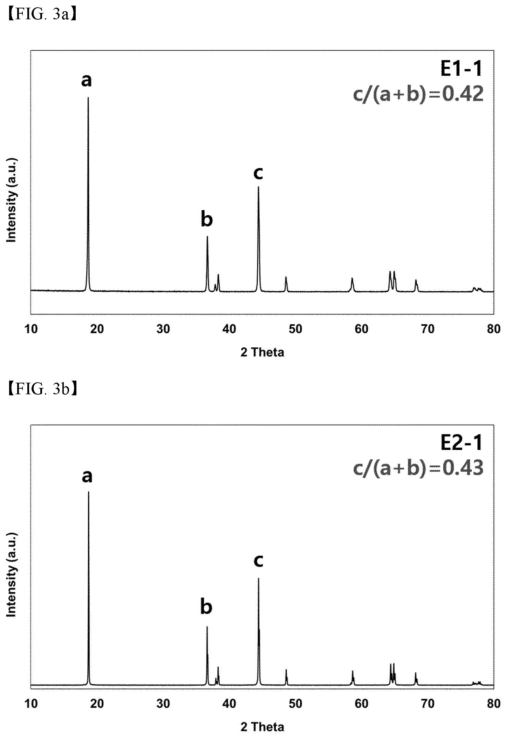

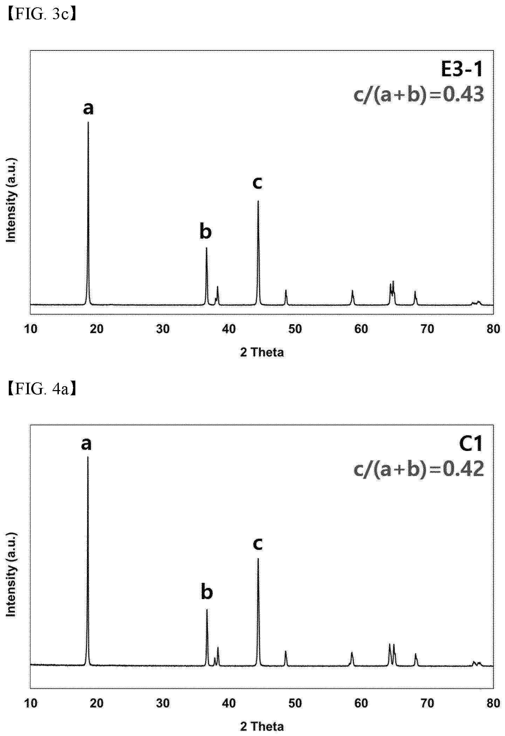

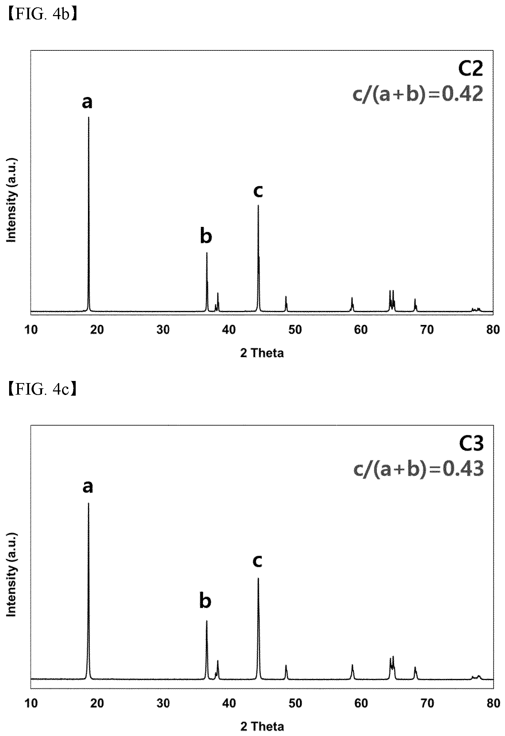

XRD analysis was performed on the transition metal hydroxides, novel precursor particles, and cathode active materials prepared in Reference Examples, Examples, and Comparative Examples under the following measurement conditions, and the results are shown in Table 2 and FIGS. 1A to 4C.
For reference, the 2θ position and intensity of the peak with the highest intensity in the 2θ range in the XRD analysis results are shown in Table 2 below, and the ratio of c/(a+b), which is the intensity ratio of the corresponding peaks, is shown. Similarly, FIGS. 1A to 4C show the results of XRD analysis of the materials prepared in Reference Examples, Examples, and Comparative Examples, and the peaks having the strongest intensity in the 2θ range in the results of XRD analysis are represented by a to c, and the ratio of c/(a+b), which is the ratio of the peak intensity, is also shown.

<Measurement conditions>

Power source: CuKα (linear focus), Wavelength: 1.541836Å, Operating axis: 2θ/θ,
Measurement method: Continuous, Counting unit: cps, Start angle: 10.0°,
End angle: 80.0°, Number of integrations: 1 time, Sampling width: 0.01°,
Scan speed: 1.3°/min, Voltage: 40kV, Current: 40 Ma,
Divergence slit: 0.2 mm, Divergence species limiting slit: 10 mm,
Scattering slit: Open, Receiving slit: Open, Offset angle: 0°,
Goniometer radius: 285mm, Optical system: Focusing method, Attachment: ASC-48,
Slit: D/teX, Slit detector for Ultra: D/teX Ultra,
Filter: None, Rotation speed: 30 rpm.
Incident Monochrome: CBO Ni-Kβ,

[Table 2]

| | a (10~30°) | | b (30~40°) | | c (40~50°) | | c/(a+b) |
|---|---|---|---|---|---|---|---|
| | intensity | 2θ | intensity | 2θ | intensity | 2θ | |
| R1 | 1911 | 19.4 | 414 | 39.5 | 41 | 42.0 | 0.02 |
| R2 | 1975 | 19.4 | 1528 | 39.1 | 48 | 42.0 | 0.01 |
| R3 | 1682 | 19.1 | 1907 | 38.5 | 57 | 42.3 | 0.02 |
| E1 | 655 | 18.6 | 282 | 36.5 | 638 | 44.0 | 0.68 |
| E2 | 657 | 18.8 | 435 | 38.0 | 1275 | 44.2 | 1.17 |
| E3 | 125 | 21.3 | 607 | 37.3 | 978 | 43.5 | 1.34 |
| E1-1 | 4422 | 18.7 | 1272 | 36.7 | 2398 | 44.4 | 0.42 |

(continued)

| | a (10~30°) | | b (30~40°) | | c (40~50°) | | c/(a+b) |
|---|---|---|---|---|---|---|---|
| | intensity | 2θ | intensity | 2θ | intensity | 2θ | |
| E2-1 | 59189 | 18.7 | 18406 | 36.6 | 33051 | 44.4 | 0.43 |
| E3-1 | 10410 | 18.7 | 3280 | 36.6 | 5940 | 44.4 | 0.43 |
| C1 | 4764 | 18.7 | 1299 | 36.7 | 2460 | 44.4 | 0.41 |
| C2 | 59262 | 18.7 | 18335 | 36.7 | 32675 | 44.4 | 0.42 |
| C3 | 10053 | 18.7 | 3355 | 36.6 | 5793 | 44.4 | 0.43 |

As can be seen from Table 2 and FIGS. 1A to 4C, the ratios of c/(a+b) of E1 to E3 corresponding to the novel precursor particles of the present invention are at least 0.6, while all of R1 to R3 corresponding to the transition metal hydroxides of Reference Examples, E1-1 to E3-1 corresponding to the cathode active materials of Examples, and C1 to C3 corresponding to the cathode active materials of Comparative Examples, are less than 0.6, specifically, not more than 0.5. In addition, as can be seen from FIGS. 1A to 4C, the peaks of E1 to E3 are observed in combinations of at least some or all of R1 to R3, E1-1 to E3-1, and C1 to C3.

[Experimental Example 2] Identification and electrochemical evaluation of lithium byproducts

Lithium byproduct analysis was performed on the cathode active materials prepared in each of Examples and Comparative examples under the following measurement conditions, and the results are shown in Table 3 below. For reference, the amount of lithium byproduct is the sum of $Li_2CO_3$ and LiOH present on the surface of the cathode active material.

<Measurement method>

   Measuring equipment: Metrohm AG
   Sample pretreatment: 30±0.01g of cathode active material and 100g of distilled water are stirred for 30 minutes, and then naturally filtered through filter paper
   Measuring method: 60±0.01g of filtrate was weighed and the pH was titrated

In addition, a 2032 coin-type half-cell was produced using the cation active material synthesized in each of Examples and Comparative Examples, and electrochemical evaluation was performed. Specifically, the cathode active material, polyvinylidene fluoride as a binder (KF1100), and Super-P as a conductive material were mixed at a weight ratio of 92:5:3, and the mixture was mixed with N-methyl-2 pyrrolidone as a solvent to prepare a cathode active material slurry. Then, aluminum foil (Al foil, thickness: 20 $\mu$m), which is a cathode current collector, was coated with the slurry, dried at 120°C, and then rolled to prepare a cathode plate. The loading level of the rolled cathode was 7 mg/cm$^2$ and the rolling density was 3.90 g/cm$^3$. The cathode plate was punched to 14Φ, and a 2032 coin-type half-cell was manufactured using lithium metal as an anode and an electrolyte (EC/DMC 1:1 + 1 mole of $LiPF_6$). The manufactured coin-type half-cell was aged at room temperature for 12 hours, and then a charge-discharge test was performed thereon. Capacity was evaluated on 190 mAh/g at 0.1C rate, and the charge-discharge conditions were constant current (CC)/constant voltage (CV) in the voltage range of 4.3 to 3.0. After measurement, the initial charge-discharge capacity and initial resistance (Ω (resistance) = ΔV/I) are shown in Table 3 below.

In addition, the coin-type half-cell manufactured above was aged at room temperature for 10 hours and then HPPC (hybrid pulse power characterization) test was performed. The resistance was measured using the following equation based on the voltage difference obtained by pulsing the discharge current at 1C in the SoC range of 90 to 10%, and the results are shown in Table 3.

[Table 3]

| | Li byproduct | Charge capacity | Discharge capacity | Lifespan | DCIR(Ω) |
|---|---|---|---|---|---|
| | % | mAh/g | mAh/g | 30cycle | 30cycle |
| E1-1 | 0.165 | 193.6 | 171.2 | 96.5 | 17.91 |

(continued)

|  | Li byproduct | Charge capacity | Discharge capacity | Lifespan | DCIR($\Omega$) |
|---|---|---|---|---|---|
|  | % | mAh/g | mAh/g | 30cycle | 30cycle |
| E2-1 | 0.114 | 213.1 | 197.4 | 96.4 | 11.26 |
| E3-1 | 0.178 | 243.5 | 216.7 | 92.4 | 18.69 |
| C1 | 0.228 | 191.0 | 168.4 | 95.0 | 28.42 |
| C2 | 0.195 | 210.1 | 193.8 | 95.8 | 17.97 |
| C3 | 0.268 | 240.0 | 212.9 | 90.1 | 27.94 |

As can be seen from Table 3 above, the cathode active materials E1-1 to E3-1 prepared using the novel precursor particles of the present invention, compared to C1 to C3 prepared using transition metal hydroxides R1 to R3, have improved resistance characteristics and enhanced initial capacity and lifespan characteristics based on effects such as structural stability, reduction of lithium byproducts, and suppression of side reactions with the electrolyte.

Although preferred embodiments of the present invention have been disclosed for illustrative purposes, those skilled in the art will appreciate that various modifications, additions, and substitutions are possible without departing from the scope and spirit of the invention as disclosed in the accompanying claims.

**Claims**

1. A novel precursor particle comprising at least one transition metal,

   wherein the precursor particle has an intensity ratio of c/(a+b) of 0.6 or more,
   wherein, in each $2\theta$ range in XRD analysis, a represents an intensity of the highest peak in a $2\theta$ range of not less than 10° and less than 30°, b represents an intensity of the highest peak in a $2\theta$ range of not less than 30° and less than 40°, and c represents an intensity of the highest peak in a $2\theta$ range of not less than 40° and not more than 50°.

2. The novel precursor particle according to claim 1, wherein the precursor particle comprises an oxide structure.

3. The novel precursor particle according to claim 1, wherein the precursor particle has at least a part of structural property (1) of transition metal hydroxide as a precursor, structural property (2) of lithium transition metal oxide as an active material, and structural property (3) of transition metal oxide as a rock salt in Miller index in each $2\theta$ range of XRD analysis peaks that occur in each $2\theta$ range.

4. The novel precursor particle according to claim 3, wherein the precursor particle has all of structural property (1), structural property (2) and structural property (3).

5. The novel precursor particle according to claim 1, wherein the precursor particle comprises at least one alkali metal.

6. The novel precursor particle according to claim 5, wherein the precursor particle comprises an alkali metal at a mixing ratio of 0.1 to 1.5 based on a molar ratio (number of moles of alkali metal/number of moles of transition metal).

7. The novel precursor particle according to claim 5, wherein the alkali metal forms a crystal structure through a chemical reaction with the transition metal, or is present as an unreacted substance inside the transition metal particle or on the surface of the transition metal particle.

8. The novel precursor particle according to claim 5, wherein the alkali metal comprises at least one of Li or Na.

9. The novel precursor particle according to claim 1, wherein at least one of peaks a, b, and c in XRD analysis has a half-width of 0.50 $2\theta$(°) or more.

10. The novel precursor particle according to claim 1, wherein the novel precursor particle has a composition of the following Formula 1:

$$[(1-x-y)A_2CO_3*xAOH*yA_2O] \quad / \quad [(1-a-b)M(OH)_2*aMOOH*bM(OH_{1-c})_2] \quad /$$

$$[MO_{(2-\alpha)}] / [A_{1-\gamma}M_{1+\gamma}O_2] \quad (1)$$

wherein

x and y satisfy $0 \leq x \leq 1$, $0 \leq y \leq 1$, and $0 \leq x+y \leq 1$;
a, b, and c satisfy $0 \leq a \leq 1$, $0 \leq b \leq 1$, $0 \leq a+b \leq 1$, and $0 < c < 0.5$;
$\alpha$ and y satisfy $0 \leq \alpha \leq 1$ and $-0.5 \leq \gamma \leq 1$;
A/M(molar ratio) >_ 0;
A includes at least one alkali metal; and
M includes at least one transition metal.

**11.** A novel precursor powder for preparing a cathode active material comprising the novel precursor particle according to claim 1.

**12.** The novel precursor powder according to claim 11, wherein the novel precursor powder has a configuration in which a compound or mixture containing an alkali metal is mixed with the novel precursor particle.

**13.** A cathode active material for secondary batteries prepared using the novel precursor particle according to claim 1.

【FIG. 1a】

【FIG. 1b】

【FIG. 1c】

【FIG. 2a】

【FIG. 2b】

【FIG. 2c】

**【FIG. 3a】**

**E1-1**
**c/(a+b)=0.42**

**【FIG. 3b】**

**E2-1**
**c/(a+b)=0.43**

【FIG. 3c】

【FIG. 4a】

【FIG. 4b】

【FIG. 4c】

<div align="center">

**INTERNATIONAL SEARCH REPORT**

</div>

| International application No. |
| --- |
| **PCT/KR2023/004110** |

| **A.** | **CLASSIFICATION OF SUBJECT MATTER** |
| --- | --- |
| | **C01G 53/00**(2006.01)i; **H01M 4/525**(2010.01)i; **H01M 4/505**(2010.01)i; **C01G 53/04**(2006.01)i; **H01M 4/02**(2006.01)i |

According to International Patent Classification (IPC) or to both national classification and IPC

| **B.** | **FIELDS SEARCHED** |
| --- | --- |

Minimum documentation searched (classification system followed by classification symbols)

C01G 53/00(2006.01); C01G 45/00(2006.01); C01G 51/00(2006.01); H01M 10/052(2010.01); H01M 10/0525(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전구체(precursor), 양극(cathode), X선회절(X-ray diffraction; XRD), 전이금속 (transition metal), 알칼리금속(alkali metal), 공침(co-precipitation), 리튬이차전지(Li-ion battery), 입자(particle)

| **C.** | **DOCUMENTS CONSIDERED TO BE RELEVANT** | | |
| --- | --- | --- | --- |
| Category* | Citation of document, with indication, where appropriate, of the relevant passages | | Relevant to claim No. |
| X | JP 2016-201209 A (TEIJIN LTD.) 01 December 2016 (2016-12-01)<br>See paragraphs [0015]-[0029] and claims 1-3 and 7-10. | | 1-13 |
| A | KR 10-2118289 B1 (ENERGY MATERIAL TECHNOLOGY CO., LTD.) 03 June 2020 (2020-06-03)<br>See claims 1 and 2. | | 1-13 |
| A | KR 10-2019-0113607 A (SK INNOVATION CO., LTD.) 08 October 2019 (2019-10-08)<br>See claims 1-10. | | 1-13 |
| A | KR 10-2019-0125405 A (UMICORE et al.) 06 November 2019 (2019-11-06)<br>See claims 1-20. | | 1-13 |
| A | KR 10-2022-0018330 A (LG CHEM, LTD.) 15 February 2022 (2022-02-15)<br>See claims 1-16. | | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 June 2023** | **28 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/004110**

| Patent document cited in search report | | | Publication date (day/month/year) | Patent family member(s) | | | Publication date (day/month/year) |
|---|---|---|---|---|---|---|---|
| JP | 2016-201209 | A | 01 December 2016 | JP | 6475064 | B2 | 27 February 2019 |
| KR | 10-2118289 | B1 | 03 June 2020 | | None | | |
| KR | 10-2019-0113607 | A | 08 October 2019 | CN | 112219297 | A | 12 January 2021 |
| | | | | KR | 10-2495992 | B1 | 06 February 2023 |
| | | | | US | 2021-0098787 | A1 | 01 April 2021 |
| | | | | WO | 2019-190217 | A1 | 03 October 2019 |
| KR | 10-2019-0125405 | A | 06 November 2019 | CN | 110662717 | A | 07 January 2020 |
| | | | | CN | 110662717 | B | 15 April 2022 |
| | | | | EP | 3589585 | A1 | 08 January 2020 |
| | | | | JP | 2020-510971 | A | 09 April 2020 |
| | | | | JP | 6856763 | B2 | 14 April 2021 |
| | | | | KR | 10-2312238 | B1 | 13 October 2021 |
| | | | | US | 11114662 | B2 | 07 September 2021 |
| | | | | US | 11367872 | B2 | 21 June 2022 |
| | | | | US | 2020-0006762 | A1 | 02 January 2020 |
| | | | | US | 2020-0020944 | A1 | 16 January 2020 |
| | | | | US | 2023-0054397 | A1 | 23 February 2023 |
| | | | | WO | 2018-158078 | A1 | 07 September 2018 |
| KR | 10-2022-0018330 | A | 15 February 2022 | CN | 116057730 | A | 02 May 2023 |
| | | | | EP | 4174989 | A1 | 03 May 2023 |
| | | | | WO | 2022-031116 | A1 | 10 February 2022 |

Form PCT/ISA/210 (patent family annex) (July 2022)